(19) Europäisches Patentamt
European Patent Office
Office européen des brevets

(11) Publication number: **0 295 429 B1**

(12) **EUROPEAN PATENT SPECIFICATION**

(45) Date of publication of patent specification: **15.01.92**

(51) Int. Cl.5: **G01V 5/00**, G01T 3/06

(21) Application number: **88107644.2**

(22) Date of filing: **11.05.88**

(54) **Explosive detection system.**

(30) Priority: **26.05.87 US 53950**

(43) Date of publication of application:
**21.12.88 Bulletin 88/51**

(45) Publication of the grant of the patent:
**15.01.92 Bulletin 92/03**

(84) Designated Contracting States:
**DE ES FR GB IT**

(56) References cited:
**US-A- 3 808 444**
**US-A- 3 832 545**

(73) Proprietor: **SCIENCE APPLICATIONS INTERNATIONAL CORPORATION**
**10260 Campus Point Drive**
**San Diego California 92121(US)**

(72) Inventor: **Gozani, Tsahi**
**3422 Greer Road**
**Palo Alto California 94303(US)**
Inventor: **Shea, Patrick M.**
**814 Trenton Drive**
**Sunnyvale California 94089(US)**

(74) Representative: **Patentanwälte Grünecker, Kinkeldey, Stockmair & Partner**
**Maximilianstrasse 58**
**W-8000 München 22(DE)**

**EP 0 295 429 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an explosive detection apparatus as set forth in the preamble of claim 1. An apparatus of this kind is known from US-A-3 832 545.

### Description of the Prior Art

A great need exists for the scanning of luggage, baggage and other parcels for the detection of any explosive material contained or concealed within their confines. For example, a large number close to two million (2,000,000) pieces of luggage, are checked and/or carried onto aircraft daily by close to seven hundred and fifty thousand (750,000) passengers within six hundred (600) airports extending across the USA. Many more packages move through the mails or are shipped to sensitive buildings. There is a possibility, albeit small, that any one piece of luggage or parcel might contain explosive material. It is, therefore, desirable to protect the public by providing detection systems to scan the luggage and parcels to detect the presence of any explosive material.

It thereby follows that any system of checking luggage or parcels must have a very high probability of detection in order to be effective. Because of the large number of parcels processed, a high throughput is necessary for practicality. In addition, any detection system because of the large number of scanned items, is bound to occasionally give a false alarm. The probability of these false alarms must be minimized in order to provide for an effective explosive detection system. This is true since when an alarm occurs it is not known, at that time, whether it is true or false. This means that each time an alarm occurs, a passenger or parcel must be detained for further investigation. If false alarms are significantly high the nuisance level and the delays could be unacceptable to the public. It is, therefore, important that any explosive detection system must have a very high probability of detection, a high throughput rate, and yet at the same time, have a very low probability of false alarms. These conflicting criteria have hampered efforts in the past to build a reliable and usable system.

In general, prior art systems have not met the desired characteristics of having a high probability of detection with a low probability of false alarms at acceptable throughput rates. As an example, one such prior art system is shown in US-A-3,832,545, mentioned above. This document discloses a system for the detection of nitrogen, which is generally present in the explosive materials to be detected. The object under observation is positioned within a cavity structure and with the object bombarded by thermal neutrons. The thermal neutrons interact with any nitrogen contained in the object to induce the emission of gamma rays at an energy level characteristic of the nitrogen element.

The emitted gamma rays are then detected by two parallel planar arrays of gamma ray detectors. Aforementioned document specifically describes the use of liquid or plastic type organic scintillator detectors having an end surface for viewing a portion of the article being inspected and with the length of the organic scintillator being substantially greater than the effective diameter of the end surface. As described in this prior art, the array of organic scintillators provides for a crude two dimensional profile of the nitrogen content within the object being inspected. The two dimensional concentration profile of the nitrogen is then used to provide for a detection of an explosive. This type of prior art system has a number of deficiencies, including both a low gamma ray intensity and spatial resolution of the detection of the concentration of the nitrogen contained in the object under inspection, and the insensitivity of the system to detect explosive devices which are deliberately positioned within the object under inspection so as to defy detection. Because of the use of liquid or plastic type scintillator, long times are required to make a decision about any object. The system described in that document is also slow and cumbersome in operation which is a further limitation to its usefulness.

Other types of prior art explosive detection systems depend upon the prior seeding of explosive materials with a tracer material, such as a radioactive tracer. Although this type of system could be very useful if all explosive material were manufactured with such tracer material, because of the large amount of explosive material which has already been manufactured and because of the difficulty of controlling the manufacture of all explosive material so as to contain such tracer material, this type of system is not practical. A usable system must be able to detect the presence of explosive material of a conventional type and of an unconventional type, whether disposed within an object either in its original manufactured form, or if deployed within the object so as to attempt to confuse or evade the detection system. The prior art systems have not met these various criteria and cannot produce the desired high probability of detection with the relatively low production of false alarms.

An acceptable response to the explosive threat to aviation, mails, or shipping requires detection techniques that are highly sensitive, specific, rapid and non-intrusive. The efficient detection of nitrogen, at this point, offers the best overall solution. It is, therefore, important that this detection of nitrogen be provided to give the maximum information

of the physical parameters of the explosive, such as density and spatial distribution. The use of nuclear based techniques which subject the luggage or parcels to thermal neutrons can be the basis of a system to produce the desired results, but this system cannot be based on the prior art techniques. It is important that the intensity, energy and spatial distribution of the detected radiations from the object under observation must be provided in such a way so as to help to determine the presence or absense of explosives and this has not yet been accomplished.

In addition to high detection sensitivity and low false alarm the detection of the explosive should be independent of the specific configuration and must be non-intrusive in order to protect privacy. The detection equipment, of course, must be non-hazardous to the contents of the checked items and to the operating personnel and environment. Other more general criteria are that the system must be reliable, easily maintained and operable by relatively unskilled personnel and that the cost must be low enough so as to be non-burdensome to airlines and airports. Finally, it is desirable, when all other requirements achieved that the size of the system be relatively small so that the system may be useful in a wide variety of environments.

In addition to the nuclear based systems described above, non-nuclear systems have also been investigated. These systems have achieved relatively high efficiencies of detection, but generally have relatively high false alarm rates and have long screening times. These type of non-nuclear systems, therefore, by themselves cannot achieve the desired results. It is possible to combine a non-nuclear system with a nuclear system, but the present invention is directed to specific improvements in the nuclear based type of system.

In order to develop a proper explosive detection system, an understanding is required of the properties of the various explosives relevant to the specific techniques to be used. Although there are a large number of explosive types, a general classification into six major groups with minor variations, has been proposed. The proposed classification scheme includes the following types of explosives: (1) nitroglycerine based dynamites, (2) ammonium nitrate based dynamites, (3) military explosives, (4) homemade explosives, (5) low order powders, and (6) special purpose explosives.

Nitroglycerine based dynamites are the most common form of explosives. The basic composition includes equal amounts of nitroglycerine and ethylene glycol dinitrate, plus a desensitizing absorber in the form of cellulose in either sodium or ammonium nitrate.

The ammonium nitrate based dynamites have been replacing nitroglycerine based dynamites in popularity. These types of dynamites are commonly referred to as slurries or water gels. The two general types of ammonium based dynamites are the cap-sensitive and the cap-insensitive types. The former consists of aluminum, ammonium nitrate, ethylene glycol and water while the latter contains wax or fuel oil and water.

Military explosives are formed of Composition-4 (C-4), TNT and picric acid. C-4 is composed of cyclotrimethylene trinitramine (RDX) and a plasticizer.

Homemade explosives are diverse and are limited only by the creativity of the perpetrator. Ammonium nitrate (fertilizer) and fuel oil are the most common and available constituents.

Low order powders (black and smokeless) have typically been assembled in pipe bomb configurations and have been used extensively in that form. Black powder contain potassium nitrate, carbon and sufur. Smokeless powder is primarily pure nitrocellulose or a mixture of nitrocellulose and nitroglyerine.

Special purpose explosives include detonating cords, blasting caps and primers. The explosive entities in the special purpose explosives are PETN, lead azide, lead styphanate, mercury fulminate and blasting gel.

In general, all of these explosives contain a relatively high amount of nitrogen ranging from nine to thirty five percent by weight. The nominal density of these explosives is typically 1.6 g/cm$^3$ and with ranges between 1.25 to 2 g/cm$^3$ or more. These physical properties demonstrate that the most unique signature of explosives is the high concentration and density of the nitrogen content. There are other physical factors that identify explosives, but these other factors do not form part of the present invention. However, one factor which is important is that most explosives have a minimum progagation thickness or diameter in order to be effective. The minimum propagation thickness entails a sizable contiguous body of explosives in the other two dimensions. This information is useful to the detection of explosives without making a specific assumption of the actual shape of the explosive.

In can be seen, therefore, that a nuclear detection technique can provide for the detection of the nitrogen content to reliably indicate the presence of a large nitrogen content, However, the frequent occurance of nitrogen in non-explosive materials limits the level of detection sensitivity and merely detecting the presence or absence of nitrogen alone is not sufficient. Therefore, additional information is required beyond simply sensing the presence of the nitrogen. The present invention provides for this additional information using specific structures and a specific detection configuration to

provide for a greater reliability in the detection of explosives.

## SUMMARY OF THE PRESENT INVENTION

The basis for the explosive detection apparatus of the present invention is the use of neutrons from a radioisotope or an electronic neutron generator which neutrons are then slowed down to create a cloud of low energy thermal neutrons within a cavity. The luggage or other parcels pass through the cavity and the thermal neutrons react with the variety of nuclei in the luggage or parcels and produce characteristic high energy gamma rays which may then be detected by external detectors. The detector processing electronics then converts the detected signals into pulses suitable for computer processing.

The present invention relates to the specific arrangement and type of the detectors relative to the use of thermal neutrons as a source to provide the proper information. The information may then be converted by computer processing to indicate the possible presence of an explosive threat. At a minimum, if there is a high enough count rate indicating the presence of a great deal of nitrogen, the apparatus of the present invention can easily detect the presence of an explosive. The apparatus of the present invention can also detect explosives provided in more unconventional configurations and at the same time reduce the number of false alarms to a relatively low level. The prior art detector systems in general provide for the gross detection, but cannot provide for the more sensitive detection of the unconventional configurations while at the same time, provide for a relatively low level of false alarms.

The explosive detection apparatus of the present invention includes the use of efficient inorganic scintillators capable of resolving closely spaced high energy gamma ray lines. Specifically, sodium iodide scintillators are used to provide for detection, but it is to be appreciated that other inorganic scintillators such as cesium iodide, bismuth germanate and barium floride scintillators may also be used. In addition, inorganic solid state detectors such as lithium-drifted germanium, high purity germanium or mercuric iodide may be used.

The inorganic scintillators in the present invention are arranged to form at least one ring of detectors so as to provide for a detection of a plurality of slices or parallel successive planes of the object under inspection as the object is moved continuously through the ring of detectors. In a specific embodiment of the invention, this ring is broken into sets of C-rings; and in order to provide for a better three dimensional representation, two spaced sets of C-ring detectors may be used with the open ends of the C-rings facing each other so as to provide for a detection completely around the object and with the plurality of successive planes building up a three dimensional profile of the object under inspection.

The apparatus of the present invention is capable of scanning a continuous flow of luggage and parcels. In addition, the operation of the apparatus may be fully automatic so that the apparatus does not depend on operator experience or interpretation and thereby provides for an automatic detection of explosives.

## BRIEF DESCRIPTION OF THE DRAWINGS

A clearer understanding of the present invention will be seen with reference to the following description and drawings wherein:

Figure 1 illustrates a perspective view of a luggage and parcel inspection apparatus;

Figure 2 illustrates the system of Figure 1 with a shield portion of the apparatus removed;

Figure 3 illustrates a detailed view of a conveyer path for the system showing the positioning of a pair of thermal neutron sources and sets of inorganic scintillator detectors constituting the C-ring detector array;

Figure 4 illustrates a block diagram of the apparatus showing the detection of particular gamma rays for detecting of explosive material and with waveforms (a), (b) and (c) representative of the signals at particular points in the apparatus; and

Figure 5(a), (b) and (c) illustrate typical spatial profiles of nitrogen concentration for explosive and non-explosive materials.

## DESCRIPTION OF THE PREFERRED EMBODIMENT

As shown in Figure 1, an explosive detection system 10 includes a loading station 12 (which may consist of a scale to weigh the luggage) and an unloading station 14 (which may consist of a diverter to separate the alarmed lugguge from the rest). The loading station leads to a continuous conveyer belt 16 which extends from the loading station 12 to the loading station 16 and has a continuous motion as indicated by the arrows 18. A central shield structure 20 encloses the explosive detection apparatus and with two external wing portions 22 and 24 extending from the central structure 20 to enclose the conveyer belt 16 leading from and to the loading and unloading stations 12 and 14.

As can be seen in Figure 2, wherein the shields 20, 22 and 24 are removed, the explosive detection apparatus is positioned over a central

portion of the conveyer belt 16. Specifically, the explosive detection apparatus includes a cavity structure 26 through which the conveyer belt 16 passes. As shown in Figures 1 and 2, various articles of luggage and parcels may be positioned on the loading station 12 and may then be carried through the cavity 26 to the unloading station 14 by the conveyer belt 16.

The cavity 26 is formed by external wall members including a top wall 28, side walls 30 and 31 and a bottom wall (not shown) which is positioned below the conveyer belt 16. Extending through the wall members are thermal neutron sources, such as source 32, positioned at the top of the cavity and as shown in Figure 3, neutron source 34 spaced from the neutron source 32 and positioned at the bottom of the cavity. Also as shown in Figures 2 and 3, detector structures are positioned to form two C-rings of detectors having their opened ends facing the neutron sources. This may be seen in Figure 3 wherein the side detector structures 36 and 38 together with the bottom detector structure 40 are all associated with the neutron source 32. Similarly, side detector structures 42 and 44 together with the top detector structure 46 are all associated with the neutron source 34.

As shown in Figure 3, the side detector structures are provided by two sets of four detectors 48 located in each side detector structure 36 and 38. The bottom detector structure 40 includes two sets of seven detector 48. The detector structures associated with the neutron source 34 similarly include two sets of four detectors 49 located in each side detector structure 42 and 44 and with two sets of seven detectors 49 located in the top detective structure 46. The detectors 48 associated with the neutron source 32, therefore, form a C-ring of detectors having the opened portion of the C facing upward. In an opposite fashion the detectors 49 associated with the neutron source 34 form a C-ring with the opened portion of the C facing downward. The combination of the two sets of C-ring detectors thereby provide for the detection of a complete ring around the object under inspection to produce a better three dimensional profile of the nitrogen distribution within any particular object passing through both sets of detectors.

It is to be appreciated that the invention is described with reference to the use of two C-ring detector structures and with each C-ring including two sets of parallel rows and columns of detectors. It should be appreciated that only a single C-ring structure may be used with only a single row and column of detectors. The use of the additional parallel sets of detectors improves the visualization of the profile of the concentration of nitrogen, but a simpler system could be used with a single C-ring and single rows and columns of detectors. It is also to be appreciated that more detectors could be used. A full ring of detectors could also be placed out of the plane of the source, around the cavity.

The actual structure of the neutron source and its environment, such as the structures 32 and 34, may be of any type. For example, the neutron source may be a radioisotope (such as 252Cf) or an electronic neutron source (such as (D,D) or (D,T) generators). By collisions, mostly with the nuclei of the selected materials surrounding the source the neutrons are slowed down to create a cloud of low energy thermal neutrons within the cavity. The low energy thermal neutrons specifically interact with the variety of nuclei in the luggage or parcel. The interaction of the low energy thermal neutrons produces characteristic high energy gamma rays which are detected by the external rows and columns forming the C-ring detectors.

Each detector in the rows and columns preferably are formed of inorganic scintillators. Specifically, all of the detectors, such as represented by a detector 48, may be formed of an inorganic scintillator material, such as sodium iodide (NaI). Other inorganic materials may be used and as an example, inorganic materials such as cesium iodide (CsI), bismuth germanate (BGO-$Bi_4$ $Ge_3$ $O_{12}$) or barium fluoride ($BaF_2$) also may be used to provide for the detector structure. In addition inorganic solid state detectors such as lithium-drifted germanium (Ge(Li)), high purity germanium (HPGe) or mercuric iodide ($HgI_2$) may be used. The particular details of a specific detector structure do not form a part of the present invention, but the specific use of an inorganic scintillator with good energy resolution and efficiency to detect gamma rays produced by thermal neutrons provides for a unique detection of nitrogen and/or other elements do form a part of the present invention.

Although inorganic scintillators have been used in the past with thermal neutrons, this use was not for the detection of nitrogen in explosives, but rather to provide for the detection of chlorine, iron, chromium, etc. as a background component and not specifically for the detection of the nitrogen component and spatial distribution of the explosive material. Other uses of inorganic scintillators have then in combination with fast neutron sources so as to detect nitrogen, but this different type of neutron source provides for a different type of detection.

The present invention contemplates the specific combination of a thermalized neutron source with an inorganic scintillator, such as a sodium iodide detector. This specific combination provides for the capability of resolving closely spaced high energy gamma ray lines and specifically for detecting the particular gamma ray lines representative of the nitrogen content of explosives. These particular

high energy gamma rays lines occur at 10.8 MeV. The inorganic scintillator detector is used because it is a very efficient detector and because it provides acceptable features in a number of areas. These areas include level of total countrate, the shape of the detector, availability of detector, reliability and cost. It is to be appreciated that the inorganic scintillator may also be used to detect other elements representative of an explosive.

As indicated above, the currently preferred inorganic material is sodium iodide, but other inorganic materials may be used. For example, bismuth germanate has a higher effective atomic number because of the bismuth and a higher density than the sodium iodide. The efficiency of a bismuth germanate scintillator is, therefore, higher than that of sodium iodide. However, bismuth germanate scintillators are inferior to sodium iodide in energy resolution and the cost for a bismuth germanate scintillator is much higher than that for sodium iodide and it also has a background component that can interfer with the nitrogen signal. However, both of these inorganic structures are superior to the organic scintillators used in the prior art devices.

For example, on the basis of the mean free path of 10 MeV gamma rays, sodium iodide and bismuth germanate are roughly 6 and 11 times more efficient than organic scintillators. Moreover, in terms of depositing the gamma energy in the scintillators, sodium iodide and bismuth germanate are roughly 10 and 40 times respectively more efficient than organic scintillators. The energy resolution, which is the ability to separate two lines, given as the peak's width at half the peak's height, is around 200 to 300 KeV for sodium iodide and 400 to 500 KeV for bismuth germanate at high energies and with the range depending on the crystal size and quality.

The main advantage of the prior art organic scintillators, which may be plastic or liquid, is their very fast time response permitting exceedingly high count rates. Because of the very high count rates, a high background from other neutron reactions can be handled easily and thereby eliminating the need for sophisticated cavity design. Another advantage of the organic scintillators is their relatively low cost and ease of manufacture. Even with these advantages with the use of organic scintillators, the use of the inorganic scintillators of the present invention, and specifically in the particular C-ring configuration, provides for a higher resolution and thereby a more efficient detection of any explosive material. The organic scintillators are inefficient detectors for high energy gamma rays and their gamma spectroscopical qualities are poor. Organic scintillators thereby have poor energy resolution and make the separation between nitrogen and deleterious signals, such as occur with C1, Fe, Cr or Ni, very difficult.

As can be seen in Figure 3, any item to be scanned, such as a piece of luggage, passes through the cavity on the conveyor 16 and is subjected to the thermal neutrons produced by the thermal neutron source 32. At successive positions of the piece of luggage, the individual detectors 48, forming the row 40 and columns 36 and 38, provide for a cross sectional profile of any material containing nitrogen. The C-ring of detectors thereby provides for a two dimensional slice or plane of the nitrogen concentration and with a three dimensional profile built up by the successive slices produced as the luggage moves through the C-ring of detectors.

The two dimensional plane provided by the detector structures 36, 38 and 40 has less resolution at the upper end since the C-ring is not complete. Although a detector structure could also be provided along the upper surface of the cavity such detector structure could interfere with the production of thermal neutrons by the source 32 of such neutrons. A more efficient way of completing the ring is to have a second C-shaped group of detector structures provided downstream of the first group so that the luggage moves from the first C-ring of detector structures to the second C-ring of detector structures and with the open ends of the C-rings in the first and second sets being opposite to each other. The information from the two sets of C-rings of detector structures may be merged electronically in a computer to provide for a complete picture. As indicated above, this picture forms a three dimensional image of the container such as the luggage and its contents by building up the successive slices or planes of information.

Figure 4 illustrates in general the detection of the information by any one of the individual detectors 48. As shown in Figure 4, neutrons from the sources, either 32 or 34, are thermalized and impinge on a piece of luggage or parcel as represented by the block 50. The individual detectors 48 forming the C-ring detector structures, each detect the production of gamma rays. The reaction between the thermal neutrons and the nitrogen in the explosive or other material, is as follows:

$$^{14}_{7}N + ^{1}_{0}n \longrightarrow ^{15}_{7}N + \gamma$$

The first factor in the above equation is the nitrogen in the explosive or other material within the luggage. For example, wool, cotton, etc. all contain nitrogen. The nitrogen when bombarded

with thermal neutrons, as shown by the second factor, produces nitrogen in a changed form (another isotope of nitrogen) plus gamma rays, of which approximately 14% are at 10.8 MeV. Each gamma ray as detected by a detector 48 produces an output from the detector as shown in waveform (a) in Figure 4. As can be seen, the detector 48 produces an output signal having a height "h" and with this signal decaying exponentially to zero value at approximately one micro second. The detectors 48 are supplied with a high voltage from a high voltage source 52. The height "h" and the area under the decaying signal are both proportional to the gamma ray energy.

The output from each detector 48 is passed directly or through a preamp and amplifier 54 to produce an output signal as shown in waveform (b) in Figure 4. It can be seen that the individual gamma ray is converted from the exponentially decreasing signal to a pulse signal having a height "H" which is proportional to the area under the signal shown in waveform (a). It is to be appreciated that each gamma ray received by each detector 48 produces successive signals representing the concentration of nitrogen.

The output from the preamp/amplifier 54 is passed through an analog to digital (A to D) converter 56 to produce a digital number representing the height "H" of the waveform (b) of Figure 4. It can be seen, therefore, that the outputs from the A to D converters 56 are a series of digital numbers representing the detection of gamma rays representing the concentration of nitrogen. A small range of the digital numbers correspond to the gamma rays of interest. As more and more gamma rays are detected at each detector, the digital number from the A to D converters 56 at each point in time is counted. The counts of each digital number which occurs, which is proportional to the number of nitrogen gamma rays incident on the detector, are then coupled into a computer 58 for computation of a profile for each slice or plane of the object under observation and for the production of a three dimensional representation of the concentration of nitrogen of the object. Waveform (c) illustrates the profile of the spectrum received by the detectors 48 and with the space 60 between the two lines representing the area of interest, more specifically the gamma rays representing nitrogen.

Figures 5(a), (b) and (c) illustrate typical profiles for explosive material in a block form, non-explosive materials, such as a wool coat or jacket, and explosive material in sheet form. As can be seen in Figure 5(a), which represents the detection from one column of detectors at four successive, planes as the object moves past the dectectors, the high readings of 12 in two successive planes and 8 in a third successive plane, represent a high concentration of nitrogen rich material probably representive of a block of explosive material. The detectors in the other column and along the row would confirm the presence of such block material. The large difference between readings in the profile of Figure 5(a) show an unusual density of nitrogen material not typical in other types of items which contain nitrogen.

For example, Figure 5(b) illustrates an item such as a wool coat or suit which may contain a relatively high amount of nitrogen, but with the nitrogen spread out in a diffuse pattern which would not be representative of an explosive material. Although the overall nitrogen content of the wool article is quite high, the concentration does not reach the levels of explosive material.

Figure 5(c) illustrates an explosive material in a sheet form along one side or edge of the luggage and again, the concentration of nitrogen and high readings relative to the lower readings indicates the presence of something having a relative high concentration of nitrogen, plus a relatively high density for this concentration. This again would typically be a profile of an explosive material. The computer 58, therefore, may be programmed to identify such specific profiles and provide for an alarm such as through an alarm 62 so that the luggage or parcel may be subjected to a more thorough inspection.

## Claims

1. An apparatus for detecting the presence of explosives in an object (50) under observation by detection of a particular element, and the local distribution of concentration of such particular element, at the different positions in the object (50), including,

   a cavity structure (26) for receiving the object (50) under observation,

   means (32,34) in the cavity structure (26) for providing thermal neutrons to the object (50) under observation to obtain the production from the object (50) of gamma rays representative of the presence and concentration of the particular element in the object (50),

   means (16) for moving the object (50) continuously and progressively through the cavity structure (26),

   a plurality of detector means (36-48) disposed in the cavity structure (26) in a common plane and positioned relative to the neutron means (32,34) and the object (50) for detecting the gamma rays from the object (50) to produce output signals indicative at each instant of such

gamma rays, and

means (54-62) responsive to the output signals produced by the plurality of detector means (36-48) to indicate the presence and distribution of concentration of the particular element in the object (50),

**CHARACTERIZED IN THAT**

said at least one common plane is disposed substantially perpendicular to the direction of movement of the object (50) in the cavity structure (26), and the detector means (36-40) of this at least one common plane are disposed in a C-ring configuration with an open end, the thermal neutron means (32) being disposed in the open end of the C-ring configuration,

said means (54-62) responsive to the output signals produced by the plurality of detector means (36-48) being responsive at progressive instants of time during the movement of the object (50) through the cavity structure (26) for processing such output signals in progressive positions in the cavity structure (26) during the movement of the object (50) in the cavity structure (26) to indicate the concentration on a three-dimensional basis of the particular element in the object (50).

2. An apparatus as set forth in Claim 1 wherein the detector means (36-48) constitute inorganic detectors.

3. An apparatus as set forth in Claim 2 or 3 wherein the detector means include detectors formed from at least one of the following materials:

Sodium Iodide (NaI), cesium Iodide (CeI), Bismuth Germanate ($Bi_4GE_3O_{12}$), Barium Fluoride ($BaF_2$) and solid state detectors including Lithium-drifted Germanium (GeLi), High Purity Germanium (HPGe) and Mercuric Iodide ($HgI_2$).

4. An apparatus as set forth in one of the preceding claims comprising at least two of such common planes of detector means (36-48) and associated thermal neutron means (32,34), said common planes being located at two progressive positions in the direction of movement of the object (50) through the cavity structure (26).

5. An apparatus as set forth in any one of the preceding claims wherein the moving means includes a conveyor (16) passing through the cavity structure (26) and supporting the object (50) to move the object (50) through the cavity structure (26).

6. An apparatus as set forth in any one of the preceding claims wherein the processing means (54-62) includes computer means (58) for producing an alarm condition in response to particular three-dimensional representations of the concentration of the particular element in the object (50) at the different positions in the object (50).

7. An apparatus as set forth in claim 6 wherein means are included for digitizing and summing the output signals from the detector means (36-48) and wherein the processing means (54-62) are operative upon the integrated output signals to provide the three-dimensional representation of the concentration of the particular element in the object (50) at the different positions in the object (50).

8. An apparatus as set forth in any one of the preceding claims wherein the plurality of individual detectors (36-48) are formed in a pair of common planes in a pair of C-ring configurations in which a first one of said C-ring configurations has its open end opposite the open end in the second one of said C-ring configurations and in which the pair of C-ring configurations are spaced from each other in the direction of movement of the object (50) through the cavity structure (56).

**Revendications**

1. Un appareil pour détecter la présence d'explosifs dans un objet (50) observé par détection d'un élément particulier, et la répartition locale de la concentration de cet élément particulier, aux différentes positions dans l'objet (50), comprenant,

une structure creuse (26) pour la réception de l'objet (50) observé,

des moyens (32, 34) dans la structure creuse (26) afin de soumettre des neutrons thermiques à l'objet (50) observé pour obtenir la production à partir de l'objet (50) de rayons gamma représentatifs de la présence et de la concentration de l'élément particulier dans l'objet (50),

un moyen (16) pour déplacer l'objet (50) de

manière continue et progressive au travers de la structure creuse (26),

une pluralité de moyens de détection (36-48) disposés dans la structure creuse (26) dans un plan commun et placés près des moyens de neutrons (32, 34) et de l'objet (50) pour détecter les rayons gamma émis par l'objet (50) pour produire des signaux de sortie indiquant à chaque instant ces rayons gamma, et

des moyens (54-62) répondant aux signaux de sortie produits par la pluralité de moyens de détection (36-48) pour indiquer la présence et la répartition de la concentration de l'élément particulier dans l'objet (50),

**CARACTERISE EN CE QUE**

ledit plan commun est disposé essentiellement à la perpendiculaire de la direction du déplacement de l'objet (50) dans la structure creuse (26), et les moyens de détection (36-40) de ce plan commun sont disposés dans une configuration en anneau-C avec une extrémité ouverte, les moyens de neutrons thermiques (32) étant disposés dans l'extrémité ouverte de la configuration en anneau-C,

lesdits moyens (54-62) répondant aux signaux de sortie produits par la pluralité des moyens de détection (36-48) étant sensibles à des moments progressifs au cours du déplacement de l'objet (50) au travers de la structure creuse (26) pour traiter ces signaux de sortie dans des positions progressives dans la structure creuse (26) au cours du déplacement de l'objet (50) dans la structure creuse (26) pour indiquer la concentration sur une base tridimensionnelle de l'élément particulier dans l'objet (50).

2. Un appareil tel que décrit dans la revendication 1 dans lequel les moyens de détection (36-48) constituent des détecteurs inorganiques.

3. Un appareil tel que décrit dans les revendications 2 ou 3 dans lequel les moyens de détection comprennent des détecteurs formés d'au moins l'un des matériaux suivants :

de l'iodure de sodium (NaI), de l'iodure de césium (CeI), du germanate de bismuth ($Bi_4Ge_3O_{12}$), du fluorure de baryum ($BaF_2$) et des détecteurs à l'état solide comprenant du germanium dopé au lithium (GeLi), du germanium de grande pureté (HPGe) et de l'iodure de mercure ($Hg_{12}$).

4. Un appareil tel que décrit dans l'une des revendications précédentes comprenant au moins deux de ces plans communs de moyens de détection (36-48) et des moyens associés de neutrons thermiques (32, 34), lesdits plans communs étant situés à deux positions progressives dans le sens du déplacement de l'objet (50) au travers de la structure creuse (26).

5. Un appareil tel que décrit dans l'une quelconque des revendications précédentes dans lequel le moyen de déplacement comprend une bande de manutention (16) passant au travers de la structure creuse (26) et supportant l'objet (50) pour déplacer l'objet (50) au travers de la structure creuse (26).

6. Un appareil tel que décrit dans l'une quelconque des revendications précédentes dans lequel les moyens de traitement (54-62) comprennent un moyen informatique (58) pour déclencher une alarme en réponse à des représentations tridimensionnelles particulières de la concentration de l'élément particulier dans l'objet (50) aux différentes positions dans l'objet (50).

7. Un appareil tel que décrit dans la revendication 6 dans lequel des moyens sont inclus pour numériser et totaliser les signaux de sortie des moyens de détection (36-48) et dans lequel les moyens de traitement (54-62) entrent en fonction dès les signaux de sortie intégrés pour produire la représentation tridimensionnelle de la concentration de l'élément particulier dans l'objet (50) aux différentes positions dans l'objet (50).

8. Un appareil tel que décrit dans l'une quelconque des revendications précédentes dans lequel une pluralité de détecteurs individuels (36-48) sont formés dans deux plans communs dans deux configurations en anneau-C dans lesquelles une première desdites configurations en anneau-C présente son extrémité ouverte à l'opposé de l'extrémité ouverte dans la seconde desdites configurations en anneau-C et dans lesquelles les deux configurations en anneau-C sont espacées l'une de l'autre dans le sens du déplacement de l'objet (50) au travers de la structure creuse (56).

**Patentansprüche**

1. Vorrichtung zur Ermittlung der Anwesenheit von Explosivstoffen in einem beobachteten Gegenstand (50) durch Ermittlung eines speziellen Elements, und der örtlichen Verteilung der Konzentration dieses speziellen Elements an verschiedenen Positionen in dem Gegenstand (50), enthaltend:

eine Hohlraumkonstruktion (26) zur Aufnahme des beobachteten Gegenstandes (50),

Einrichtungen (32,34) in der Hohlraumkonstruktion (26) zur Abgabe von thermischen Neutronen an den beobachteten Gegenstand (50), um die Erzeugung von Gammastrahlen durch den Gegenstand (50) zu erzielen, die für die Anwesenheit und Konzentration des speziellen Elements in dem Gegenstand (50) repräsentativ sind,

eine Einrichtung (50) zum kontinuierlichen und fortschreitenden Bewegen des Gegenstandes (50) durch die Hohlraumkonstruktion (26),

mehrere Detektoreinrichtungen (36-48), die in der Hohlraumkonstruktion (26) in einer gemeinsamen Ebene angeordent sind und relativ zu den Neutroneneinrichtungen (32,34) und dem Gegenstand (50) angeordnet sind, um die Gammastrahlen von dem Gegenstand (50) zu ermitteln, um Ausgangssignale zu erzeugen, die in jedem Zeitpunkt für diese Gammastrahlen kennzeichnend sind, und

Einrichtungen (54-62), die auf die Ausgangssignale ansprechen, die von der Vielzahl der Detektoreinrichtungen (36-48) erzeugt werden, um die Anwesenheit und Konzentrationsverteilung des speziellen Elements in dem Gegenstand (50) anzuzeigen, dadurch gekennzeichnet, daß

die genannte wenigstens eine gemeinsame Ebene im wesentlichen senkrecht zur Bewegungsrichtung des Gegenstandes (50) in der Hohlraumkonstruktion (26) angeordnet ist und die Detektoreinrichtungen (36-40) dieser wenigstens einen gemeinsamen Ebene in einer C-Ring-Konfiguration mit einem offenen Ende angeordnet sind, wobei die thermische Neutroneinrichtung (32) in dem offenen Ende der C-Ring-Konfiguration angeordnet ist,

die Einrichtungen (54-62), die auf die Ausgangssignale ansprechen, die von der Vielzahl der Detektoreinrichtungen (36-48) erzeugt werden, auf fortschreitende Zeitpunkte während der Bewegung des Gegenstandes (50) durch die Hohlraumkonstruktion (26) ansprechen, um die Ausgangssignale an fortschreitenden Stellen in der Hohlraumkonstruktion (26) während der Bewegung des Objekts (50) in der Hohlraumkonstruktion (26) zu verarbeiten, um die Konzentration des speziellen Elements in dem Gegenstand (50) auf einer dreidimensionalen Basis anzuzeigen.

**2.** Vorrichtung nach Anspruch 1, bei der die Detektoreinrichtungen (36-48) anorganische Detektoren sind.

**3.** Vorrichtung nach Anspruch 2, bei der die Detektoreinrichtungen Detektoren enthalten, die aus wenigstens einem der folgenden Materialien gebildet sind:

Natriumjodid (NaI), Cäsiumjodid (CeI), Wismutgermanat ($Bi_4GE_3O_{12}$), Bariumfluorid ($BaF_2$) und Festkörperdetektoren mit Lithium-versetztem Germanium (GeLi), hochreinem Germanium (HPGe) und Quecksilberjodid ($HgI_2$).

**4.** Vorrichtung nach einem der vorhergehenden Ansprüche, enthaltend wenigstens zwei solcher gemeinsamer Ebenen von Detektoreinrichtungen (36-48) und zugehörigen thermischen Neutroneinrichtungen (32,34), wobei die gemeinsamen Ebenen in zwei aufeinanderfolgenden Positionen in Bewegungsrichtung des Gegenstandes (50) durch die Hohlraumkonstruktion (26) angeordnet sind.

**5.** Vorrichtung nach einem der vorhergehenden Ansprüche, bei der die Bewegungseinrichtung einen Förderer (16) umfaßt, der durch die Hohlraumkonstruktion (26) läuft und den Gegenstand (50) trägt, um den Gegenstand (50) durch die Hohlraumkonstruktion (26) zu bewegen.

**6.** Vorrichtung nach einem der vorhergehenden Ansprüche, bei der die Verarbeitungseinrichtung (54-62) eine Rechnereinrichtung (58) enthält, um einen Alarmzustand in Abhängigkeit von speziellen dreidimensionalen Darstellungen der Konzentration des speziellen Elements in dem Gegenstand (50) an den verschiedenen Positionen in dem Gegenstand (50) zu erzeugen.

**7.** Vorrichtung nach Anspruch 6, bei der Einrichtungen umfaßt sind zum Digitalisieren und Summieren der Ausgangssignale von den Detektoreinrichtungen (36-48), und bei der die Verarbeitungseinrichtungen (54-62) mit den integrierten Ausgangssignalen arbeiten, um die dreidimensionale Darstellung der Konzentration des speziellen Elements in dem Gegenstand (50) an den verschiedenen Stellen in dem Gegenstand (50) zu erzeugen.

**8.** Vorrichtung nach einem der vorhergehenden Ansprüche, bei der die Vielzahl von einzelnen Detektoren (36-48) in einem Paar gemeinsamer Ebenen in einem Paar von C-Ring-Konfigurationen angeordnet sind, von denen eine erste der C-Ring-Konfigurationen mit seinem offenen Ende dem offenen Ende der zweiten C-Ring-Konfiguration entgegengesetzt ist und wobei die beiden C-Ring-Konfigurationen voneinander in Bewegungsrichtung des Gegenstands (50) durch die Hohlraumkonsturktion (56) Abstand voneinander haben.

FIG. 1

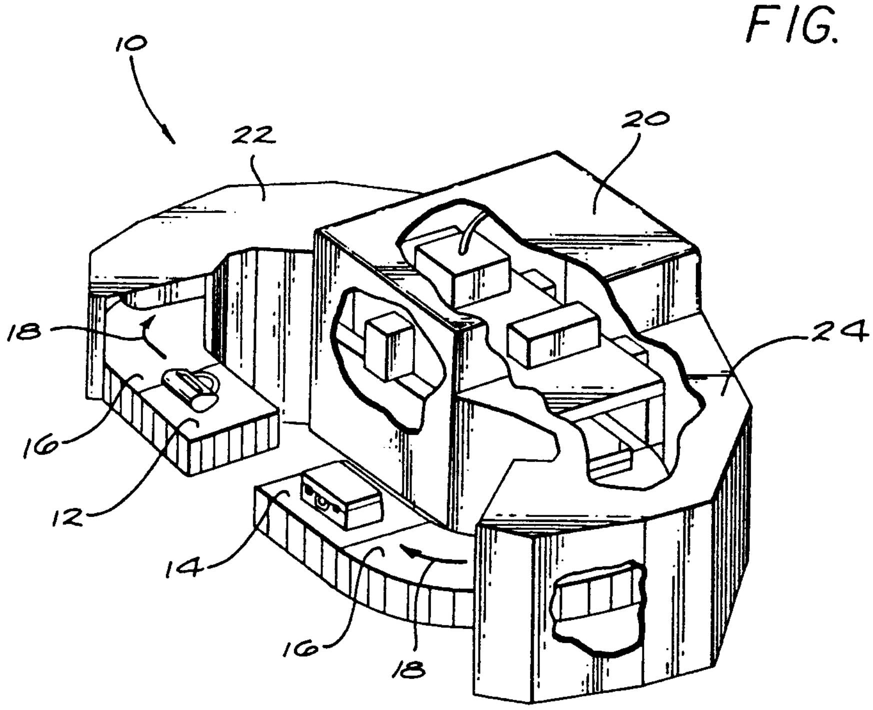
10
22
20
18
24
16
12
14
16
18

FIG. 2

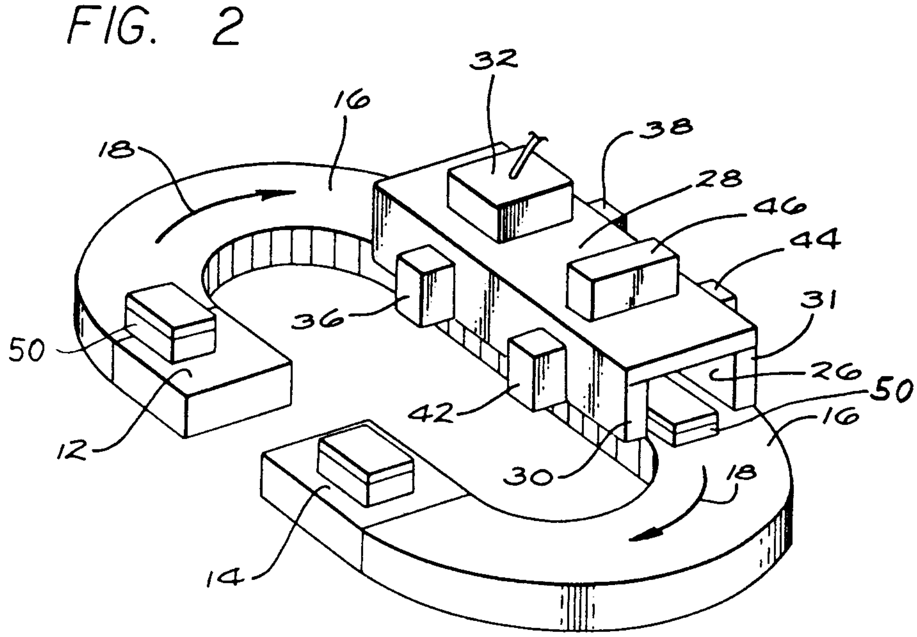
32
16
38
18
28
46
44
36
31
50
26
50
12
42
16
30
18
14

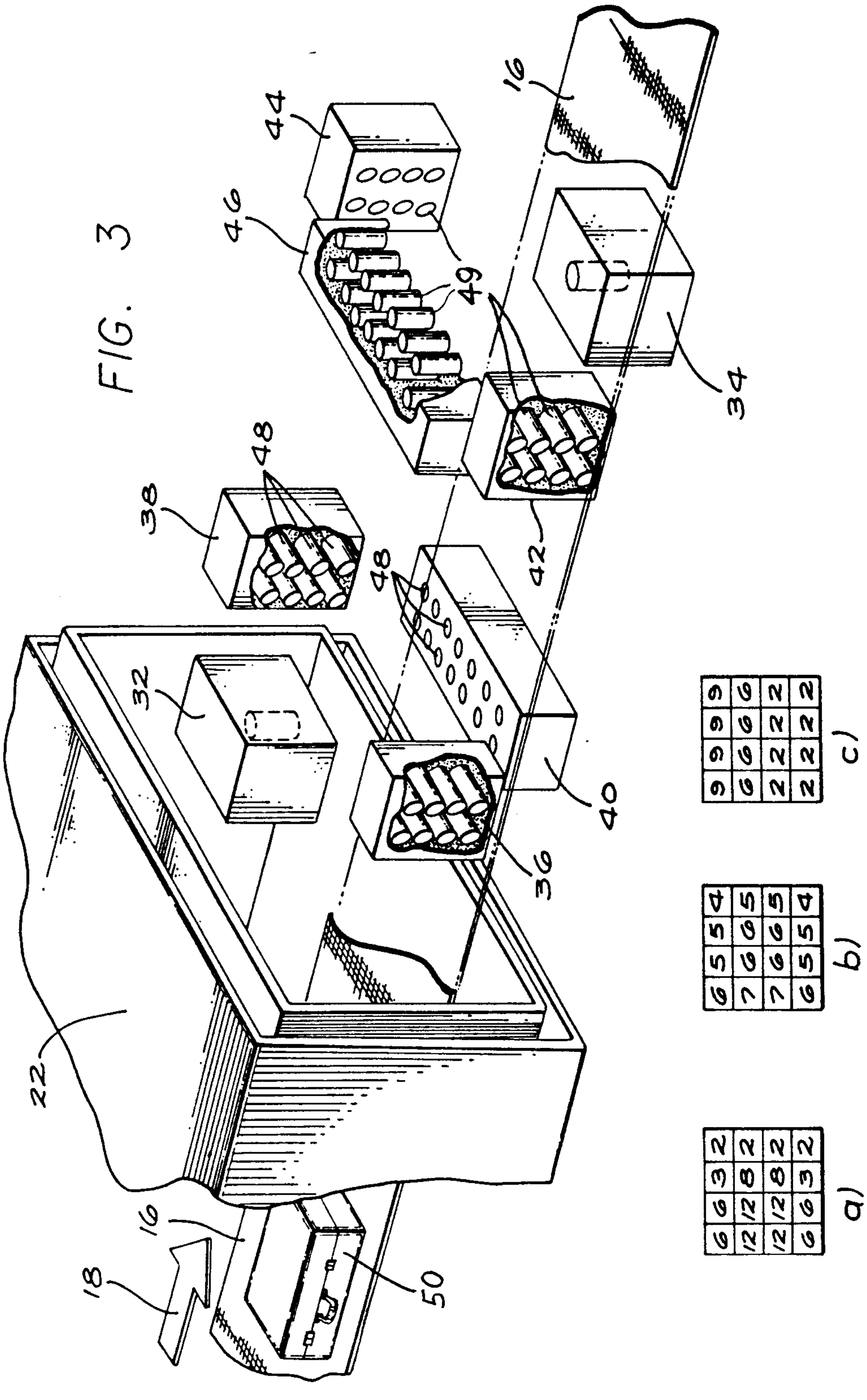


FIG. 3

FIG. 5

FIG. 4

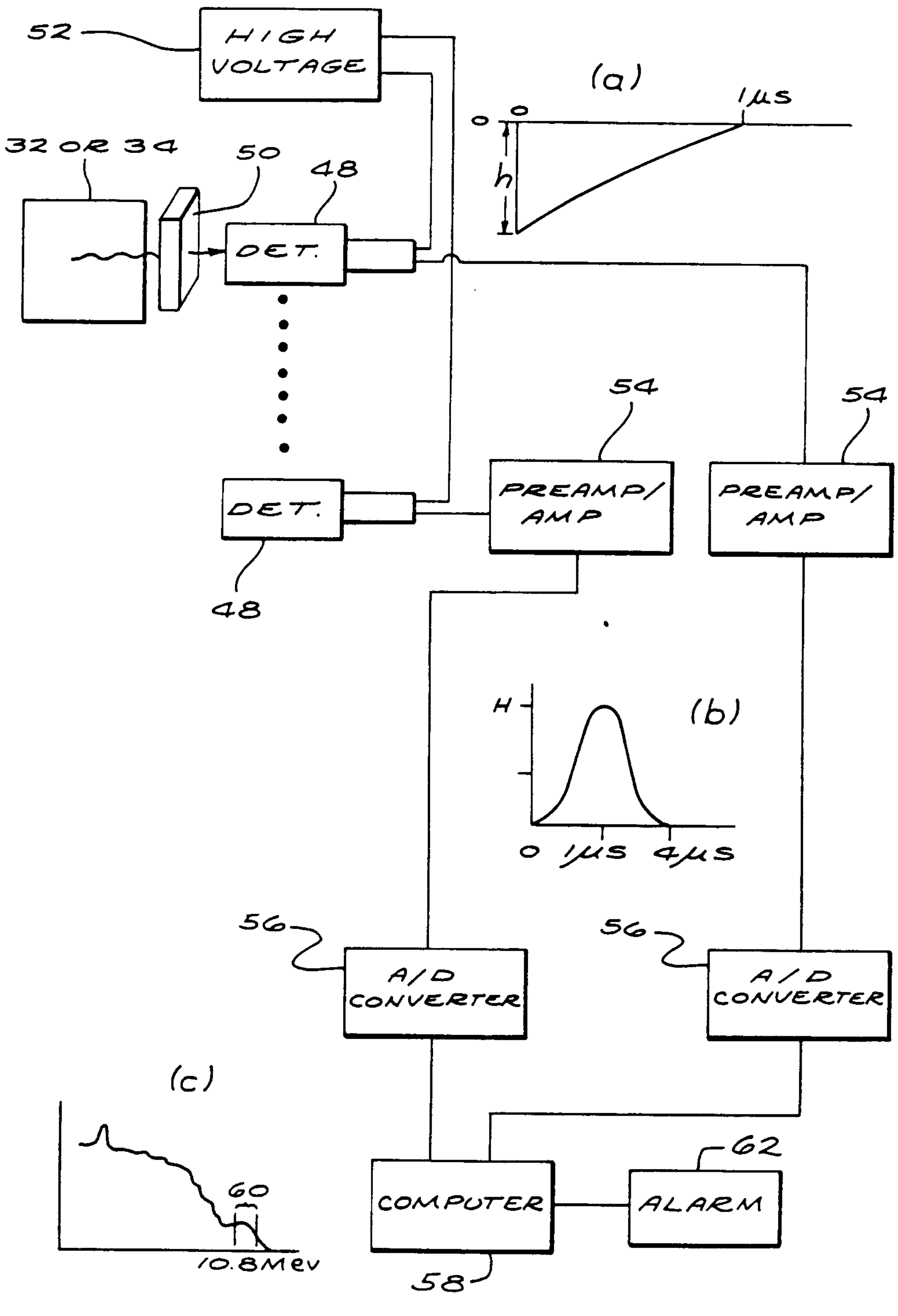
52
HIGH VOLTAGE
32 OR 34
50
48
DET.
(a)
0
0
1μs
h
54
54
PREAMP/ AMP
PREAMP/ AMP
DET.
48
H
(b)
0
1μs
4μs
56
56
A/D CONVERTER
A/D CONVERTER
(c)
60
10.8Mev
COMPUTER
62
ALARM
58